# EUROPEAN PATENT SPECIFICATION

(11) **EP 0 882 578 B1**
(45) Date of publication and mention of the grant of the patent: **12.04.2006**
(21) Application number: 98108930.3
(22) Date of filing: 15.05.1998
(51) Int. Cl.: B32B 27/42, B32B 27/04, C08G 8/10, C09J 161/06

(54) **clusters of polyester fibers impregnated with resol resin**
Mit Resolharz impregnierte Polyester Faseraggregate
paquets de fibres de polyester impregnés de résine résol

(30) Priority: 06.06.1997 IT PD970121
(43) Date of publication of application: 09.12.1998
(73) Proprietor: O.R.V. OVATTIFICIO RESINATURA VALPADANA S.p.A., 35010 Grantorto (Padova) (IT)
(72) Inventor: Peruzzo, Lorenzo, 36060 Fellette Di Romano D'Ezzelino (IT)
(74) Representative: Modiano, Micaela Nadia

(56) References cited:
- EP-A- 0 258 189
- WO-A-84/03293
- DE-A- 3 508 601
- DE-A- 3 923 555
- US-A- 4 264 671
- US-A- 4 397 910
- US-A- 4 758 478
- US-A- 5 118 550

## Description

The present invention relates to a stratified element and a method for producing the same.

Bituminous coverings currently used in waterproofing have core supports which vary in composition and structure according to the field of use and to the performance to be obtained.

In the prior art, for nonspecialist use and mass consumption, the substrates are composed of clusters of polyester fibers impregnated with acrylic and/or styrene-acrylic resins with the addition of melaminic and/or urea resins.

The substrates are essentially thermoplastic, i.e., they are subject to more or less significant shrinkage (depending on their grammage) when they are stretched during bituminization (which is performed at approximately 200°C) and have a dimensional stability (measured after 72 hours at 80°C) of usually less than 1%.

In a second case, in more specialist fields, composite materials are used; such materials are disclosed for example in Italian patent no. 1237149 and comprise clusters of polyester fibers containing longitudinally arranged glass strands.

Compared with the previous substrates, the substrates thus produced have considerable improvements, such as less shrinkage for an equal grammage when they are stretched during bituminization (because of the presence of the glass, which remains unchanged at high temperatures and therefore does not shift) and greater dimensional stability after installation (values far lower than 0.5% are achieved in the same conditions as the previous products).

As an alternative to substrates of the second type for specialist uses, substrates have been produced which are composed of clusters of polyester fibers and/or other thermoplastic fibers (for example polyamide fibers, polyethylene fibers, etcetera) coupled, as disclosed for example in GB-1542143, to sheets of materials which are resistant to high temperature and flame-resistant, such as sheets of the glass-reinforced plastics known by the tradename "Velovetro", aluminum sheets, etcetera.

These last substrates combine the characteristics of the above-mentioned second type of substrate with the characteristic of providing fireproof barriers.

This characteristic is an undisputed technological advantage with respect to other substrates, although there is still no flame-retardant capability.

The substrate in fact burns easily when the fire point is reached.

One of the aims of the present invention is to provide stratified elements particularly but not exclusively for building use, for example for cladding outdoor or indoor walls, which in addition to having low shrinkage when stretched, dimensional stability once installed and constituting a fire barrier, as capable of burning with a low flame propagation rate.

Within the scope of this aim, an object of the present invention is to provide a substrate which can be rated in class F2 when tested according to the DIN 53438 Teil 3 standard, i.e., among products having a low flame propagation rate.

An important object of the present invention is to provide a substrate which can be manufactured without particular technological complications with respect to conventional substrates.

Another important object of the present invention is to provide a substrate which can be manufactured using current facilities.

This aim, these objects and others which will become apparent hereinafter are achieved by a stratified element, characterized in that it comprises a cluster of polyester fibres impregnated with a phenolic resol resin.

In a preferred embodiment, the resol is mixed with additives such as soda and/or phosphate, particularly caustic soda and/or monoammonium phosphate.

Further characteristics and advantages of the invention will become apparent from the following detailed description of an embodiment thereof, given hereinafter by way of non-limitative example.

Phenolic resins are currently known for their ability to form thermosetting mats used particularly as sound-deadening materials in the automotive field.

Among phenolic resins, resol is known per se for its fire-retardant characteristics and its high temperature resistance and is used in preparing foundry molds which are resistant to molten steel castings.

According to the invention, phenolic resol resins are used for impregnation, in replacement of the thermoplastic resins that are currently used, in non-woven fabric substrates constituted by clusters of fibers made of polyester fibers.

The substrates can be conveniently used in stratified elements combined with other materials, for claddings of outdoor/indoor walls.

In the industrial process, a resol is obtained starting from a commercial product constituted by a liquid resin formed by the reaction of 40 parts of water and 60 parts of methylol phenol, by cross-linking at high temperature, in which water and formic aldehyde are eliminated.

Additives such as soda and/or phosphate particularly caustic soda and/or nonoammonium phosphate are used industrially for the impregnation of the resol.

The methylol phenol derivative advantageously receives the addition of caustic soda, monoammonium phosphate and water until a concentration of 10-15% is reached.

This solution is used to impregnate the polyester fibers.

After impregnation, the material is conveniently passed through a drying and cross-linking oven, where temperatures which can vary between 180 and 210°C are maintained.

The impregnated substrate preferably remains in the oven for 60 seconds.

During the period inside the oven, cross-linking occurs and resol isomers form according to the following reaction:

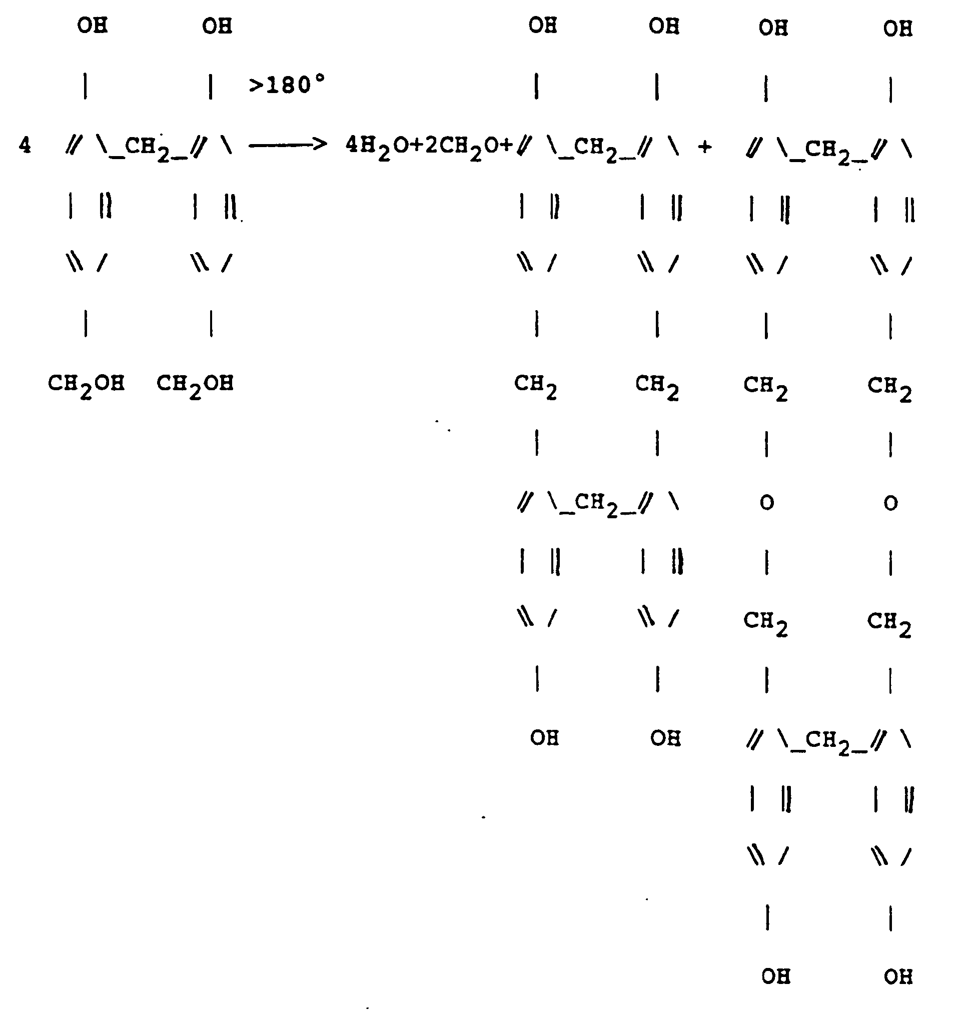

The resulting isomers are characterized by very high thermomechanical performance.

The resulting substrate, constituted by a cluster of polyester fibers impregnated with resol, is characterized by low shrinkage when stretched, high dimensional stability after installation, by the ability to constitute a fire barrier, and by the additional ability to burn with a low flame propagation rate (this being within the requirements of fire reaction class F2 according to the DIN 53438 Teil 3 standard).

Practical tests have shown that the intended aim and objects of the present invention have been achieved.

In particular, the goal of being roded as class F2 has been achieved by replacing current thermoplastic resins with a resin which is currently known for altogether different applications and does not cause particular problems from the technological point of view and from the point of view of its supply and introduction in the production cycle.

## Claims

1. A stratified element, **characterized in that** it comprises a cluster of polyester fibers impregnated with resol.

2. A stratified element according to claim 1, **characterized in that** said resol is mixed with caustic soda and /or monoammonium phosphate.

3. A method for manufacturing a stratified element according to one or more of claims 1 and 2, comprising:
-- adding caustic soda, monoammonium phosphate and water to methylol phenol until a concentration of 10-15% is reached;
-- impregnating the polyester fibers with this solution;
-- passing the impregnated fibers through an oven at temperatures which can vary between 180 and 210° C for a period of 60 seconds;
-- cooling.

## Revendications

1. Un élément stratifié, **caractérisé en ce qu'**il comprend un groupe de fibres en polyester imprégnées par du résol.

2. Un élément stratifié selon la revendication 1, **caractérisé en ce que** ledit résole est mélangé à de la soude caustique et/ou à du monophosphate d'ammonium.

3. Un procédé de fabrication d'un élément stratifié selon l'une ou plusieurs des revendications 1 et 2, comprenant :
-- l'addition de soude caustique, de monophosphate d'ammonium et d'eau à du méthylol phénol, jusqu'à atteinte d'une concentration de 10 à 15 % ;
-- imprégnation des fibres en polyester par cette solution ;
-- passage des fibres imprégnées par un four, à des températures pouvant varier entre 180 et 210°C, pour une période de temps de 60 secondes ;
-- refroidissement.

## Patentansprüche

1. Schichtenelement, **dadurch gekennzeichnet, dass** es ein mit Resol imprägniertes Polyester-Faseraggregat umfasst.

2. Schichtenelement nach Anspruch 1, **dadurch gekennzeichnet, dass** das Resol mit Natronlauge und/oder Monoammoniumphosphat gemischt ist.

3. Verfahren zur Herstellung eines Schichtenelementes nach einem oder mehreren der Ansprüche 1 und 2, folgende Schritte umfassend:
- das Hinzufügen von Natronlauge, Monoammoniumphosphat und Wasser zu Methylolphenol, bis eine Konzentration von 10 - 15 % erreicht ist;
- das Imprägnieren der Polyesterfasern mit dieser Lösung;
- das Durchleiten der imprägnierten Fasern durch einen Ofen bei Temperaturen, die zwischen 180 und 210 °C liegen können, für einen Zeitraum von 60 Sekunden;
- das Abkühlen.
